(19) Europäisches Patentamt
European Patent Office
Office européen des brevets

(11) **EP 4 674 728 A1**

(12) **EUROPÄISCHE PATENTANMELDUNG**

(43) Veröffentlichungstag:
**07.01.2026 Patentblatt 2026/02**

(51) Internationale Patentklassifikation (IPC):
***B62D 6/00*** *(2006.01)*

(21) Anmeldenummer: **25185988.0**

(52) Gemeinsame Patentklassifikation (CPC):
**B62D 6/008;** B62D 6/006

(22) Anmeldetag: **27.06.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **04.07.2024 DE 102024206332**

(71) Anmelder: **VOLKSWAGEN AKTIENGESELLSCHAFT**
**38440 Wolfsburg (DE)**

(72) Erfinder:
• **Bartels, Alexander**
  **38440 Wolfsburg (DE)**
• **Frohn, Christian**
  **38440 Wolfsburg (DE)**
• **Elvers, Sönke**
  **38440 Wolfsburg (DE)**
• **von Tardy-Tuch, Georg**
  **38440 Wolfsburg (DE)**
• **Rüger, Tobias**
  **38440 Wolfsburg (DE)**

(54) **VERFAHREN ZUM BESTIMMEN EINER ZAHNSTANGENKRAFT AN EINER LENKUNG UND LENKUNG**

(57)     Die Erfindung betrifft ein Verfahren zum Bestimmen einer Zahnstangenkraft ($F_{Zst,1}$) an einer Lenkung (1), wobei eine Querbeschleunigung ($\ddot{y}_v$) an einer Lenkachse der Lenkung (1) erfasst und/oder geschätzt wird, wobei ausgehend von der erfassten oder geschätzten Querbeschleunigung ($\ddot{y}_v$) eine Reifenseitenkraft ($F_{yv}$) bestimmt wird, wobei ausgehend von einem nichtlinearen kinematischen Reifennachlaufwert ($n_R$), einem konstruktiven Reifennachlaufwert ($n_K$), einer Spurhebelübersetzung ($i_{kin}$) und der bestimmten Reifenseitenkraft ($F_{yv}$) eine erste Zahnstangenkraft ($F_{Zst,1}$) bestimmt wird, wobei ausgehend von einem erfassten Motormoment ($M_{mot}$) einer zum Aufbringen eines Lenkmoments verwendeten elektrischen Maschine (8) eine zweite Zahnstangenkraft ($F_{zse,2}$) bestimmt wird, wobei die bestimmte erste Zahnstangenkraft ($F_{Zst,1}$) und die bestimmte zweite Zahnstangenkraft ($F_{Zst,2}$) miteinander verglichen werden, und wobei ausgehend von einem Vergleichsergebnis die bestimmte Reifenseitenkraft ($F_{yv}$) korrigiert wird, wobei der nichtlineare kinematische Reifennachlaufwert ($n_R$) ausgehend von der korrigierten Reifenseitenkraft ($F_{yv,corr}$) bestimmt wird, und wobei die bestimmte erste Zahnstangenkraft ($F_{Zst,1}$) bereitgestellt wird. Ferner betrifft die Erfindung eine Lenkung (1).

Fig. 2

**Beschreibung**

Die Erfindung betrifft ein Verfahren zum Bestimmen einer Zahnstangenkraft an einer Lenkung und eine Lenkung.

In der Automobiltechnik besteht ein großes Interesse daran, einen Betriebspunkt des Reifens, insbesondere in Grenzbereichen, zu kennen. Diese Information hilft beispielsweise dabei, zu verhindern, dass der Reifen überfahren wird, und den Reifen im optimalen Betriebspunkt zu betreiben. Weiterhin kann die Erkennung des beginnenden nichtlinearen Teils des Reifenverhaltens verwendet werden, um den Fahrer über genau diesen sich abzeichnenden Grenzbereich zu informieren. Darüber hinaus entsteht beim Wechsel von klassischen Servolenkungen (engl. Electric Power Steering, EPS) zu Steer-by-Wire-(SbW)-Systemen die Herausforderung, ein Rückkopplungsmoment mit hohem Frequenzinhalt an den Fahrer zu ermitteln. Hierzu muss zuverlässig eine Zahnstangenkraft bestimmt werden.

Aus der EP 2 566 743 B1 ist ein Verfahren zum Generieren von den Fahrzustand beschreibenden Signalen eines Kraftfahrzeugs bekannt, das mit einem Fahrdynamikregelsystem ausgestattet ist, bei dem die Zahnstangenkraft berechnet wird und unter Nutzung weiterer Signale querdynamische Größen abgeleitet werden. Dabei wird ein physikalischer Nachlauf unter Verwendung der berechneten Zahnstangenkraft und einer gemessenen Querbeschleunigung und der Gierrate bestimmt.

Aus der DE 10 2014 114 751 A1 ist ein Verfahren zum Betreiben eines Kraftfahrzeugs bekannt, das eine Lenkanlage mit einer Zahnstange aufweist, mit der Räder an einer Achse, auf denen Reifen aufgezogen sind, inklusive zugehöriger Radaufhängungen des Kraftfahrzeugs gelenkt werden. Das Kraftfahrzeug wird auf einer Fahrbahn bewegt, wobei ein Reibungsbeiwert oder eine davon abgeleitete Größe zwischen einem jeweiligen Reifen und der Fahrbahn unter Berücksichtigung eines Fahrzustands, einer Kinematik der Lenkanlage, eines Verhaltens der Reifen auf den Rädern und/oder deren Nachlaufstrecke als charakteristische Größe ermittelt wird, wobei im Verlauf einer Anwendung des Verfahrens sich ändernde Betriebsparameter des Kraftfahrzeugs und der Reifen durch eine Lernphase, die während mindestens einer Fahrt des Kraftfahrzeugs durchgeführt wird, erkannt und berücksichtigt werden.

Der Erfindung liegt die Aufgabe zu Grunde, ein Verfahren zum Bestimmen einer Zahnstangenkraft an einer Lenkung und eine Lenkung bereitzustellen.

Die Aufgabe wird erfindungsgemäß durch ein Verfahren mit den Merkmalen des Patentanspruchs 1 und eine Lenkung mit den Merkmalen des Patentanspruchs 9 gelöst. Vorteilhafte Ausgestaltungen der Erfindung ergeben sich aus den Unteransprüchen.

Insbesondere wird ein Verfahren zum Bestimmen einer Zahnstangenkraft an einer Lenkung zur Verfügung gestellt, wobei eine Querbeschleunigung an einer Lenkachse der Lenkung erfasst und/oder geschätzt wird, wobei ausgehend von der erfassten und/oder geschätzten Querbeschleunigung eine Reifenseitenkraft bestimmt wird, wobei ausgehend von einem nichtlinearen kinematischen Reifennachlaufwert, einem konstruktiven Reifennachlaufiniert, einer Spurhebelübersetzung und der bestimmten Reifenseitenkraft eine erste Zahnstangenkraft bestimmt wird, wobei ausgehend von einem erfassten Motormoment einer zum Aufbringen eines Lenkmoments verwendeten elektrischen Maschine eine zweite Zahnstangenkraft bestimmt wird, wobei die bestimmte erste Zahnstangenkraft und die bestimmte zweite Zahnstangenkraft miteinander verglichen werden, und wobei ausgehend von einem Vergleichsergebnis die bestimmte Reifenseitenkraft korrigiert wird, wobei der nichtlineare kinematische Reifennachlaufiniert ausgehend von der korrigierten Reifenseitenkraft bestimmt wird, und wobei die bestimmte erste Zahnstangenkraft bereitgestellt wird.

Ferner wird insbesondere eine Lenkung geschaffen, umfassend eine Steuereinrichtung, wobei die Steuereinrichtung dazu eingerichtet ist, eine erfasste und/oder geschätzte Querbeschleunigung an einer Lenkachse der Lenkung und ein erfasstes Motormoment einer zum Aufbringen eines Lenkmoments verwendeten elektrischen Maschine zu erhalten, ausgehend von der erfassten und/oder geschätzten Querbeschleunigung eine Reifenseitenraft zu bestimmen, ausgehend von einem nichtlinearen kinematischen Reifennachlaufwert, einem konstruktiven Reifennachlaufiniert, einer Spurhebelübersetzung und der bestimmten Reifenseitenkraft eine erste Zahnstangenkraft zu bestimmen, ausgehend von dem erfassten Motormoment eine zweite Zahnstangenkraft zu bestimmen, die bestimmte erste Zahnstangenkraft und die bestimmte zweite Zahnstangenkraft miteinander zu vergleichen, und ausgehend von einem Vergleichsergebnis die bestimmte Reifenseitenkraft zu korrigieren, den nichtlinearen kinematischen Reifennachlaufiniert ausgehend von der korrigierten Reifenseitenkraft zu bestimmen, und die bestimmte erste Zahnstangenkraft bereitzustellen.

Das Verfahren und die Lenkung ermöglichen es, die Zahnstangenkraft zuverlässig zu bestimmen. Hierbei ist eine der Grundideen, eine erste Zahnstangenkraft ausgehend von einer Querbeschleunigung über eine hieraus bestimmte Reifenseitenkraft zu bestimmen und ferner eine zweite Zahnstangenkraft ausgehend von einem erfassten Motormoment einer zum Aufbringen eines Lenkmoments verwendeten elektrischen Maschine zu bestimmen. Die bestimmte erste Zahnstangenkraft wird mit der bestimmten zweiten Zahnstangenkraft verglichen und ausgehend von einem Vergleichsergebnis wird die Reifenseitenkraft korrigiert. Mit Hilfe der korrigierten Reifenseitenkraft wird erneut die erste Zahnstangenkraft bestimmt. Dies wird insbesondere fortlaufend wiederholt und insbesondere so lange durchgeführt, bis die erste Zahnstangenkraft konvergiert ist.

Teile der Lenkung, insbesondere die Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die Steuereinrichtung kann insbesondere mindestens eine Recheneinrichtung und mindestens einen Speicher umfassen.

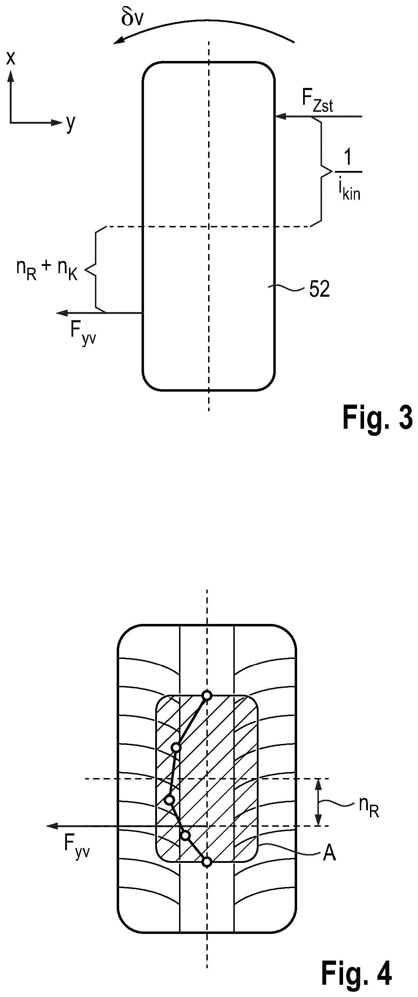

Die vom Fahrzeug auf eine Zahnstange der Lenkung wirkende Reifenseitenkraft $F_{yv}$ wird durch den Reifen ein- und über die Lenkachse an ein Lenkgetriebe weitergeleitet. Zwischen der am Lenkgetriebe vorhandenen Zahnstangenkraft $F_{Zst}$ und der Reifenseitenkraft $F_{yv}$ liegt der Reifen inklusive zweier Hebelarme: Erstens dem Reifennachlauf $n_{ges}$, bestehend aus dem konstanten konstruktiven Reifennachlauf $n_K$, der den Herstellern bekannt ist (der konstruktive Nachlauf ist insbesondere der Abstand vom Durchstoßpunkt der verlängerten Lenkachse mit der Fahrbahn zum Reifenmittelpunkt), und dem variablen, nichtlinearen kinematischen Reifennachlauf $n_R$ und zweitens der kinematischen Spurhebelübersetzung $i_{kin}$ (siehe Fig. 3). Die kinematische Spurhebelübersetzung $i_{kin}$ ist eine Funktion einer Zahnstangenposition $i_{kin} = f(x_{Zst})$, durch eine Konstruktion der Lenkung vorgegeben und somit bekannt. Der konstruktive Reifennachlauf $n_K$ ist durch eine Achskonstruktion festgelegt. Der kinematische Reifennachlauf $n_R$ hängt vom Reifen ab und ist darüber hinaus eine nichtlineare Funktion des Schräglaufwinkels $\alpha_v$.

Durch die Reifenseitenkraft $F_{yv}$ verformt sich der Reifenlatsch. Hierbei entsteht eine Kraft, die entgegen dieser Verformung wirkt. Aus der Geometrie der Verformung ergibt sich weiterhin ein Flächenschwerpunkt (siehe Fig. 4), an dem diese Kraft angreift. Ein Abstand dieses Flächenschwerpunktes zur Reifenmitte entspricht dem Reifennachlauf $n_{ges}$.

Im Falle kleiner Kräfte verformt sich der Reifenlatsch linear progressiv. Bei größeren Kräften rutscht der Reifen im hinteren Teil der Aufstandsfläche nach, woraus ein degressives Verhalten resultiert. Hierdurch nimmt der Hebelarm, also der Reifennachlauf $n_R$, nicht linear zu, sondern weist ein degressives Verhalten auf.

Durch den Zusammenhang

$$F_{Zst} = F_{yv} \cdot \left( \frac{n_R + n_K}{i_{kin}} \right) \qquad \text{Gl. 1}$$

der im stationären Fall gilt, wird offensichtlich, dass das Kräfteniveau der Zahnstange abnimmt, wenn der Grenzbereichs des Reifens erreicht wird.

Die Reifenseitenkraft kann aus der Querbeschleunigung $\ddot{y}$ bestimmt werden. Hierfür wird die Querbeschleunigung $\ddot{y}_v$ an der vorderen Achse benötigt. Weiterhin wird die Radaufstandsmasse $m_v$ der vorderen Achse benötigt. Falls die Querbeschleunigung an der vorderen Achse bekannt ist, kann die Reifenseitenkraft durch

$$F_{yv} = \ddot{y} \cdot m_v \qquad \text{Gl. 2}$$

bestimmt werden.

Aus diesen Zusammenhängen ergibt sich, dass lediglich eine Größe fehlt: der kinematische Reifennachlauf $n_R$. Das Vorgehen zu dessen Bestimmung wird nachfolgend beschrieben.

Mit Hilfe der voranstehenden Gleichungen und Zusammenhänge kann die auf die Zahnstange durch die Fahrzeugreaktion wirkende Kraft bestimmt werden. Weiterhin wird in Lenkungen das Motormoment $M_{mot}$ einer zum Aufbringen eines Lenkmoments verwendeten elektrischen Maschine (Elektromotor) der Lenkung erfasst. Die elektrische Maschine ist mechanisch fest mit der Zahnstange verbunden, wodurch das Drehmoment zwangsläufig qualitativ proportional zur Zahnstangenkraft sein muss. Zwischen dem Motormoment und der Zahnstange sind lediglich Reibungseffekte und eine endlich steife Anbindung, wodurch ein Informationsverlust entsteht. Ein grobes Niveau und ein qualitativer Verlauf sind jedoch außerhalb des durch die Reibung hervorgerufenen Unschärfebereichs gleich. Aus diesem Grund kann das Motormoment als Grundwahrheit ("ground truth") für die Bestimmung der Zahnstangenkraft herangezogen werden.

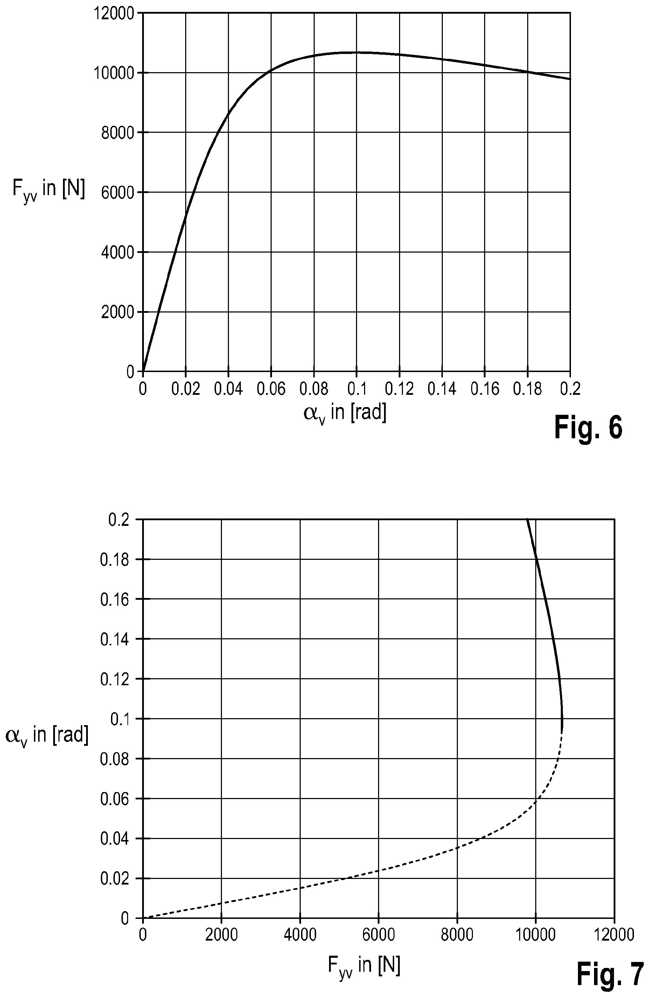

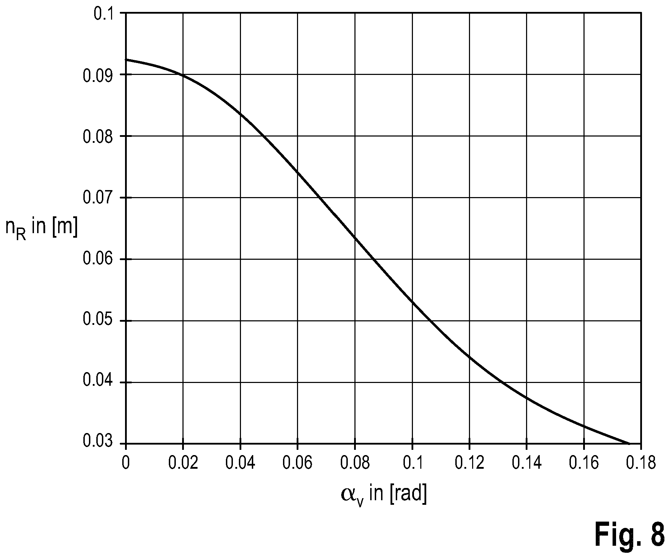

Für viele Reifen ist sowohl ein Verlauf der Reifenseitenkraft $F_{yv}$ über dem Schräglaufwinkel $\alpha_v$, als auch ein Verlauf des nichtlinearen kinematischen Reifennachlaufs $n_R$ über dem Schräglaufwinkel $\alpha_v$ zumindest grob bekannt. Beispielsweise können diese Verläufe in Form von Kennlinien im Rahmen einer Vermessung der Reifen unter gegebenen Messbedingungen bestimmt werden (siehe Figuren 7 und 8).

Es kann nun eine Reifenseitenkraft aus der Querbeschleunigung berechnet werden. Anschließend kann mit Hilfe eines inversen Reifenmodells ein Schräglaufwinkel $\alpha_v$ aus der Reifenseitenkraft berechnet werden. Dieser Schräglaufwinkel wird verwendet, um den Reifennachlauf zu bestimmen. Mit diesem Reifennachlauf $n_R$ wird nach Gl. 1 die erste Zahnstangenkraft bestimmt, insbesondere berechnet.

Nachfolgend werden beispielhaft das inverse Reifenmodell und das Nachlaufmodell beschrieben:

Die Reifenseitenkraft $F_{yv}$ ist die Eingangsgröße des inversen Reifenmodells. In diesem Reifenmodell wird der

Schräglaufwinkel $\alpha_v$ durch die Reifenseitenkraft $F_{yv}$ bestimmt. Diese beiden Größen hängen voneinander ab. Die Reifenseitenkraft kann beispielsweise durch eine Pacejka-Modellierung durch die Vorschrift

$$F_{yv} = D_{Pacejka} \cdot sin\left(C_{Pacejka} \cdot arctan\left(B_{Pacejka} \cdot \alpha_v - E_{Pacejka} \cdot \left(B_{Pacejka} \cdot \alpha_v - arctan\left(B_{Pacejka} \cdot \alpha_v\right)\right)\right)\right) \qquad \text{Gl. 3}$$

berechnet werden, wobei $B_{Pacejka}$, $C_{Pacejka}$, $D_{Pacejka}$ und $E_{Pacejka}$ Parameter des Modells sind. Die auf den Wert 1 skalierte Kraft entspricht dementsprechend:

$$F_{yv,skaliert} = sin\left(C_{Pacejka} \cdot arctan\left(B_{Pacejka} \cdot \alpha_v - E_{Pacejka} \cdot \left(B_{Pacejka} \cdot \alpha_v - arctan\left(B_{Pacejka} \cdot \alpha_v\right)\right)\right)\right) \qquad \text{Gl. 4}$$

Der Faktor D ergibt sich aus der Reifenaufstandkraft und repräsentiert den Maximalpunkt der Pacejka-Kurve:

$$D = m_v \cdot g = m \cdot \frac{l_h}{l} \cdot g \qquad \text{Gl. 5}$$

**wobei _l_ der** Radstand ist und $l_h$ der Abstand vom Schwerpunkt zur Hinterachse. Im Umkehrschluss hängt der Schräglaufwinkel von der Reifenseitenkraft ab, wenn das Modell invertiert wird (durch Invertieren der Kennlinie). Dementsprechend kann durch die Reifenseitenkraft ein Schräglaufwinkel bestimmt werden. Die Kennlinie kann jedoch nur bis zum Wendepunkt der Pacejka-Kurve verwendet werden (siehe Fig. 6). Bei der Invertierung entsteht sonst eine Uneindeutigkeit. Eine eindeutige Kennlinie ist in Fig. 7 dargestellt (gestrichelter Teil der Kurve bis zum Wendepunkt). Alternativ kann die Reifenseitenkraft durch eine Kennlinie bestimmt werden.

Mittels dieser Kennlinie (Fig. 7) wird ein Schräglaufwinkel $\alpha_v$ bestimmt. Dieser Schräglaufwinkel $\alpha_v$ wird für die Bestimmung des nichtlinearen kinematischen Reifennachlaufs $n_R$ verwendet. Der nichtlineare kinematische Reifennachlauf $n_R$ wird insbesondere ebenfalls über ein Pacejka-Modell mit den Modellparametern $B$, $C$, $D$ und $E$ modelliert (siehe Fig. 8):

$$n_R = D \cdot sin\left(C \cdot arctan\left(B \cdot \alpha_v - E \cdot \left(B \cdot \alpha_f - arctan(B \cdot \alpha_v)\right)\right)\right) \qquad \text{Gl. 6}$$

Dieser Reifennachlauf ist der Hebelarm der Momentenberechnung. Alternativ kann der nichtlineare kinematische Reifennachlauf $n_R$ auch mittels einer Kennlinie bestimmt werden.

Wie man aus den Figuren 7 und 8 erkennt, bedeutet eine größere Reifenseitenkraft $F_{yv}$ einen größeren Schräglaufwinkel $\alpha_v$ und somit einen kleineren Reifennachlaufswert $n_R$ und hierdurch am Ende eine kleinere Zahnstangenkraft. Genau hieraus ergibt sich ein Kraftabfall im Grenzbereich.

Die bestimmte erste Zahnstangenkraft wird anschließend mit dem auf eine Zahnstangenebene umgerechneten Motormoment der elektrischen Maschine der Lenkung, das heißt, mit der zweiten Zahnstangenkraft, also mit der angenommenen bzw. hypothetischen Grundwahrheit ("ground truth") verglichen. Wenn die Kraft aus der Querbeschleunigung (erste Zahnstangenkraft) größer ist als die aus dem Motormoment (zweite Zahnstangenkraft), so ist dies, bei Annahme von korrekten Kennlinien, durch den Reifennachlauf $n_R$ zu erklären. Aus einem Vergleichsergebnis, also aus einer Differenz der beiden Zahnstangenkräfte, kann geschlossen werden, ob ein größerer Schräglaufwinkel anliegen muss als ursprünglich in der inversen Kennlinie identifiziert wurde. Diese Information wird zurückgeführt, um im nächsten Rechenschritt den Betriebspunkt (also insbesondere die Reifenseitenkraft) des Reifens in der Kennlinie zu korrigieren und die Schräglaufwinkelschätzung derart anzupassen, dass die beiden bestimmten Zahnstangenkräfte quantitativ übereinstimmen. Auf diese Art werden der Schräglaufwinkel und der Reifennachlauf bestimmt bzw. geschätzt.

Insbesondere wird die zweite Zahnstangenkraft auf Motormomentenbasis mit der aus der Querbeschleunigung berechneten ersten Zahnstangenkraft verglichen und aus dem Verhältnis dieser beiden Kräfte wird ein Korrekturfaktor $c_{corr}$ berechnet. Dieser Korrekturfaktor skaliert die Reifenseitenkraft $F_{yv}$, die aus der Querbeschleunigung berechnet wurde, wodurch der Betriebspunkt in der Kennlinie verändert wird und hierdurch eine Anpassung des Schräglaufwinkels erfolgt. Dieser korrigierte Schräglaufwinkel wird verwendet, um aus einem Modell des Reifennachlaufs diesen zu berechnen. Dieser Hebelarm wird dann genutzt, um die Zahnstangenkraft aus der Querbeschleunigung zu berechnen.

Im Rahmen der Kraftkorrektur wird insbesondere der Korrekturfaktor

$$c_{corr} = \frac{F_{zst,2}}{F_{Zst,1}} \qquad\qquad \text{Gl. 7}$$

berechnet. Ein Wert der Maximalkraft der Pacejka-Kurve $D = m_v \cdot g = m \cdot \frac{l_h}{l} \cdot g$ wird durch den Korrekturfaktor skaliert, falls die Motorkraft und die Querbeschleunigungskraft auseinanderlaufen. Falls also die Kraft des Motors geringer ist als die der Querbeschleunigung, wird der Faktor D herunterskaliert, wodurch sich die Werte auf der Y-Achse der Kennlinie in Fig. 6 nach unten verschieben. Dies hat zur Folge, dass bei der aus der Querbeschleunigung berechneten Reifenseitenkraft durch die Skalierung bei gleicher Reifenseitenkraft ein größerer Schräglaufwinkel aus der Kennlinie ermittelt wird und infolgedessen ein kleinerer Wert für den nichtlinearen kinematischen Reifennachlaufwert $n_R$.

In einer Ausführungsform ist vorgesehen, dass eine Motorwinkelgeschwindigkeit der elektrischen Maschine erfasst wird, wobei ausgehend von der erfassten Motorwinkelgeschwindigkeit eine Reibungskompensation an der ausgehend von dem Motormoment geschätzten zweiten Zahnstangenkraft durchgeführt wird. Hierdurch kann eine Reibung kompensiert werden, wie nachfolgend erläutert wird. Beim Vergleichen der beiden bestimmten Zahnstangenkräfte existiert ein Unschärfebereich aufgrund der Reibung: Im Querbeschleunigungssignal ist keine Reibung enthalten, im Signal des Motormoments sind jedoch mehrere hundert Newton Systemreibung enthalten. Demnach kann durch dieses Verfahren lediglich eine Schräglaufwinkelkorrektur durchgeführt werden, wenn die aus dem Motormoment resultierende Zahnstangenkraft oberhalb einer bestimmten Grenze liegt. Dies ist bei einem hohem Reibwert unproblematisch, da hierbei der nichtlineare Bereich des Reifens, der hiermit identifiziert wird, nur bei sehr hohen Kräften auftritt. Bei niedrigen Reibwerten, beispielsweise auf einer eis- oder schneebedeckten Straße, wird der nichtlineare Bereich des Reifens jedoch bereits bei deutlich kleineren Kräften erreicht. Hier ist der Unschärfebereich durch die Systemreibung problematisch. Aus diesem Grund wird in einer Ausführungsform eine Reibungskompensation verwendet, um diesen Unschärfebereich zu reduzieren. Dies wird nachfolgend beispielhaft beschrieben.

Im Lenkgetriebe ist neben dem Motormoment auch eine Rotorwinkelgeschwindigkeit $\dot{\varphi}_{Mot}$ als erfasste Messgröße vorhanden. Die Reibung des Systems kann mit Hilfe dieser Größe und einem Reibungsmodell geschätzt werden. Als Reibungsmodell wird hier beispielsweise das LuGre-Reibungsmodell verwendet.

Bei diesem Modell wird eine Dynamik der Reibung durch ein Borstenmodell berechnet. Die Dynamik der Borstenbewegung z wird durch folgende Differentialgleichung berechnet:

$$\frac{dz}{dt} = \dot{\varphi}_{Mot} - \frac{|\dot{\varphi}_{Mot}| \cdot z}{g(\dot{\varphi}_{Mot})} \qquad\qquad \text{Gl. 8}$$

**Die Funktion** $g(\dot{\varphi}_{Mot})$ wird beispielsweise mit einem Stribeck-Modell berechnet:

$$g(\dot{\varphi}_{Mot}) = F_C + (F_S - F_C) \cdot e^{\left(-\frac{\dot{\varphi}_{Mot}}{\dot{\varphi}_s}\right)^2} \qquad\qquad \text{Gl. 9}$$

In dieser Gleichung repräsentiert $F_C$ die Coloumb'sche Reibung, $F_S$ die Losbrechkraft und $\dot{\varphi}_s$ die Stribeckgeschwindigkeit. Die Borstenauslenkung und die Stribeckkurve werden anschließend verwendet, um die Reibungskraft zu berechnen.

$$F = \sigma_0 \cdot z + \sigma_1 \cdot \frac{dz}{dt} + \sigma_2 \cdot \dot{\varphi}_{Mot} \qquad\qquad \text{Gl.10}$$

**Hierbei entspricht** $\sigma_0$ einer Steifigkeit, $\sigma_1$ einem Dämpfungskoeffizienten und $\sigma_2$ einer geschwindigkeits-proportionalen Komponente. Aus Messdaten kann das in jedem Fall vorhandene Reibungsniveau identifiziert werden. Bei niedrigeren Außentempersturen kann das Reibungsniveau beispielsweise größer sein. Eine vollständige Eliminierung der Reibung ist somit nicht in jeder Situation sichergestellt, der Unschärfebereich wird jedoch reduziert.

Diese geschätzte Reibungskraft wird dann von der aus dem Motormoment berechneten Zahnstangenkraft abgezogen, wodurch die im Signal enthaltene Reibungskraft und hierdurch der Unschärfebereich reduziert werden kann. Für das Vergleichen wird dann die um die Reibung korrigierte zweite Zahnstangenkraft verwendet.

In einer Ausführungsform ist vorgesehen, dass die Querbeschleunigung mittels eines an oder in der Nähe der Lenkungsachse angeordneten Querbeschleunigungssensors erfasst wird. Hierdurch kann die Querbeschleunigung direkt an oder in unmittelbarer Nähe der Lenkachse erfasst werden.

Weiterbildend ist in einer Ausführungsform vorgesehen, dass der Querbeschleunigungssensor in oder an einem Lenkmodul der Lenkung angeordnet ist. Hierdurch kann ein besonders einfach zu realisierender Aufbau bereitgestellt werden. Hierdurch kann insbesondere eine aufwändige Verkabelung entfallen. Insbesondere kann der Querbeschleunigungssensor direkt auf einer Platine (PCB) des Lenkmoduls, insbesondere der Steuereinrichtung des Lenkmoduls, angeordnet sein.

In einer Ausführungsform ist vorgesehen, dass die Querbeschleunigung ausgehend von erfassten Messwerten einer Inertialsensorik geschätzt wird. Hierdurch kann die Inertialsensorik des Fahrzeugs verwendet werden, sodass auf einen (zusätzlichen) Querbeschleunigungssensor verzichtet werden kann. Falls die Querbeschleunigung am Schwerpunkt des Fahrzeugs bekannt ist, kann die Querbeschleunigung an der Lenkachse mit Hilfe des Satzes von Euler für die Kinematik des Starrkörpers, der Verschiebung zwischen Vorderachse und Messpunkt der Querbeschleunigung ($P_x|P_y|P_z$), der Gierbeschleunigung $\ddot{\psi}$, der Nickbeschleunigung $\ddot{\varphi}$ und der Wankbeschleunigung $\ddot{\kappa}$ bestimmt werden

$$\begin{bmatrix} a_{x,P} \\ a_{y,P} \\ a_{z,P} \end{bmatrix} = \begin{bmatrix} a_x \\ a_y \\ a_z \end{bmatrix} + \begin{bmatrix} \ddot{\kappa} \\ \ddot{\varphi} \\ \ddot{\psi} \end{bmatrix} \times \begin{bmatrix} P_x \\ P_y \\ P_z \end{bmatrix} + \begin{bmatrix} \dot{\kappa} \\ \dot{\varphi} \\ \dot{\psi} \end{bmatrix} \times \left[ \begin{bmatrix} \dot{\kappa} \\ \dot{\varphi} \\ \dot{\psi} \end{bmatrix} \times \begin{bmatrix} P_x \\ P_y \\ P_z \end{bmatrix} \right] \qquad \text{Gl. 11}$$

**wobei** $a_x$, $a_y$, $a_z$ die Beschleunigungen am Schwerpunkt sind. In einer Ausführungsform ist vorgesehen, dass eine Radaufstandskraft erfasst und/oder geschätzt wird, wobei ausgehend von der erfassten und/oder geschätzten Radaufstandskraft eine Radaufstandsmasse bestimmt wird, wobei die bestimmte Radaufstandsmasse beim Bestimmen der Reifenseitenkraft berücksichtigt wird. Hierdurch kann ein erfasster und/oder geschätzter Wert für die Radaufstandskraft verwendet werden.

In einer weiterbildenden Ausführungsform ist vorgesehen, dass die Radaufstandskraft ausgehend von erfassten und/oder geschätzten Federwegen und/oder Beschleunigungen angepasst wird. Die Radaufstandskraft $m_v$ kann hierbei während der Fahrt durch Federwege und/oder Beschleunigungen fortlaufend angepasst werden. Wenn das Fahrzeug eine Beschleunigung erfährt, resultiert hieraus eine Wank-, Nick- und/oder Gierbewegung, die wiederum einen Radlasttransfer zur Folge hat. Beim Beschleunigen wird die Radlast an der Vorderachse insbesondere reduziert. Hierdurch werden die maximal übertragbaren Kräfte reduziert. Durch die Verwendung der Beschleunigungsinformationen kann dieser Effekt abgeschätzt und somit berücksichtigt werden, indem die Radaufstandskraft entsprechend verringert oder erhöht wird.

In einer Ausführungsform ist vorgesehen, dass ausgehend von der bereitgestellten ersten Zahnstangenkraft ein Rückkopplungsmoment für eine Lenkhandhabe der Lenkung bestimmt und bereitgestellt wird. Die aus der Querbeschleunigung bestimmte erste Zahnstangenkraft $F_{Zst,1}$ wird verwendet, um dem Fahrer eine Rückkopplung zur Verfügung zu stellen. Hierzu wird diese erste Zahnstangenkraft entweder im Lenkgetriebe in ein Rückkopplungsmoment umgerechnet und dieses an einen (Force-Feedback-)Aktuator am Lenkrad übergeben, oder aber die erste Zahnstangenkraft wird direkt an den (Force-Feedback-)Aktuator übergeben und die Umrechnung in ein Rückkopplungsmoment für den Fahrer findet dort statt. Durch einen Querbeschleunigungssensor an der Vorderachse bzw. der Lenkung kann insbesondere ein Frequenzinhalt deutlich gesteigert und die Reibung aus dem Signal des Rückkopplungsmoments eliminiert werden. Hierdurch wird insbesondere auch ein Verfahren zum Bestimmen eines Rückkopplungsmoments zur Verfügung gestellt.

Weitere Merkmale zur Ausgestaltung der Lenkung ergeben sich aus der Beschreibung von Ausgestaltungen des Verfahrens. Die Vorteile der Lenkung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Ausführungsform der Lenkung;

Fig. 2     ein schematisches Ablaufdiagramm zur Verdeutlichung des Verfahrens;

Fig. 3     eine schematische Darstellung zur Verdeutlichung der in dieser Offenbarung genannten Größen und der in der allgemeinen Beschreibung beschriebenen Zusammenhänge;

Fig. 4     eine schematische Darstellung zur Verdeutlichung der in dieser Offenbarung genannten Größen und der in der allgemeinen Beschreibung beschriebenen Zusammenhänge;

Fig. 5     eine schematische Darstellung zur Verdeutlichung der in dieser Offenbarung genannten Größen und der Ausführungsform, bei der die Querbeschleunigung ausgehend von erfassten Messwerten einer Inertialsensorik geschätzt wird;

Fig. 6     eine beispielhafte Kennlinie (Reifenseitenkraft über dem Schräglaufwinkel) gemäß einer Pacejka-Modellierung;

Fig. 7     eine beispielhafte Kennlinie (Schräglaufwinkel über der Reifenseitenkraft) gemäß einer invertierten Pacejka-Modellierung (invertierte Kennlinie der Fig. 6);

Fig. 8     eine beispielhafte Kennlinie (nichtlinearer kinematischer Reifennachlauf über dem Schräglaufwinkel) gemäß einer Pacejka-Modellierung.

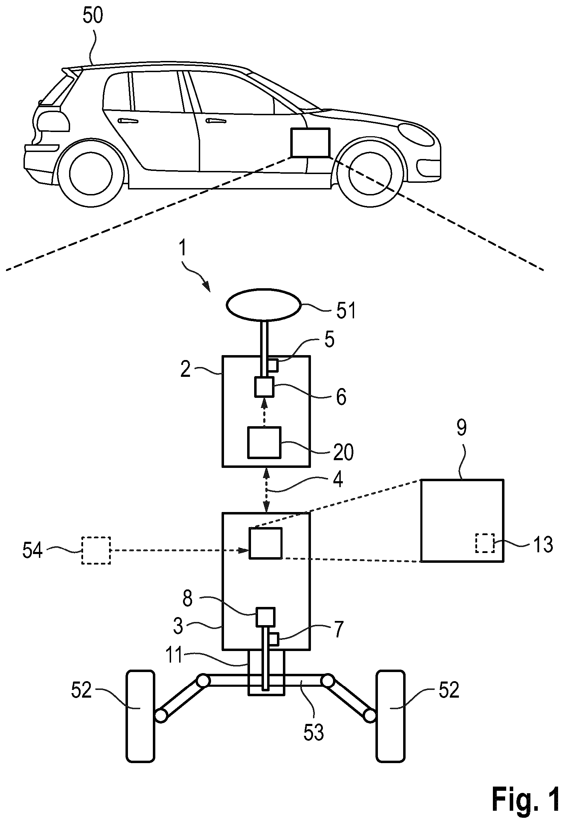

Die Fig. 1 zeigt eine schematische Darstellung einer Ausführungsform der Lenkung 1. Die Fig. 1 zeigt hierbei beispielhaft eine Steer-by-Wire-Lenkung. Grundsätzlich kann die Lenkung 1 aber auch eine elektromechanische Lenkung sein. Die Lenkung 1 umfasst ein Lenkradmodul 2, ein Lenkmodul 3 und eine Kommunikationsverbindung 4 zwischen dem Lenkradmodul 2 und dem Lenkmodul 3. Die Lenkung 1 ist insbesondere in einem Fahrzeug 50 angeordnet. Die Lenkung 1 arbeitet als Steer-by-Wire-Lenkung grundsätzlich in an sich bekannterweise. Die Lenkung 1 ist dazu eingerichtet, das in dieser Offenbarung beschriebene Verfahren durchzuführen. Das Verfahren wird nachfolgend anhand der Lenkung 1 näher beschrieben.

Das Lenkradmodul 2 ist zum Erfassen einer Lenkvorgabe eines Fahrers an einer Lenkhandhabe 51 (z.B. Lenkrad) und, da es sich im Beispiel um eine Steer-by-Wire-Lenkung handelt, zum Erzeugen eines Rückkopplungsmoments 20 an der Lenkhandhabe 51 eingerichtet. Die Lenkvorgabe wird beispielsweise in Form eines Lenkradwinkels oder eines Handmoments mittels eines Sensors 5 des Lenkradmoduls 2 erfasst. Das Rückkopplungsmoment 20 wird mittels eines Aktuators 6 des Lenkradmoduls 2 erzeugt und auf die Lenkhandhabe 51 aufgeprägt.

Das Lenkmodul 3 ist zum Stellen eines Lenkwinkels an mindestens einem lenkbaren Rad 52 ausgehend von der erfassten Lenkvorgabe und zum Bestimmen des Rückkopplungsmoments 20 eingerichtet. Eine hierfür benötigte Zahnstangenistposition einer Zahnstange 53 (oder alternativ einer Hubstange) wird mittels eines Sensors 7 des Lenkmoduls 3 direkt oder indirekt erfasst. Die Lenkvorgabe wird mittels einer elektrischen Maschine 8 (Elektromotor) des Lenkmoduls 3 auf die Zahnstange 53 und hierdurch auf die Räder 52 aufgeprägt. Dies erfolgt über ein Lenkgetriebe 11.

Die Lenkvorgabe und das Rückkopplungsmoment 20 werden jeweils mittels der Kommunikationsverbindung 4 übermittelt.

Ferner umfasst die Lenkung 1 eine Steuereinrichtung 9, welche insbesondere eine jeweilige Regelung des Lenkwinkels und des Rückkopplungsmoments 20 in an sich bekannterweise durchführt. Insbesondere ist die Steuereinrichtung 9 dazu eingerichtet, den Lenkwinkel zu regeln und hierzu eine Stellgröße, insbesondere ein (Soll-)Drehmoment für die elektrische Maschine 8, zu bestimmen. Die Steuereinrichtung 9 kann aber auch eine separate Steuereinrichtung 9 sein, die nur zur Durchführung des in dieser Offenbarung beschriebenen Verfahrens eingerichtet ist.

Die in der Fig. 1 gezeigte Ausführungsform sieht vor, dass die Steuereinrichtung 9 in dem Lenkmodul 3 angeordnet ist. Grundsätzlich kann die Steuereinrichtung 9 aber auch im Lenkradmodul 2 oder außerhalb des Lenkradmoduls 2 und des Lenkmoduls 3 angeordnet sein.

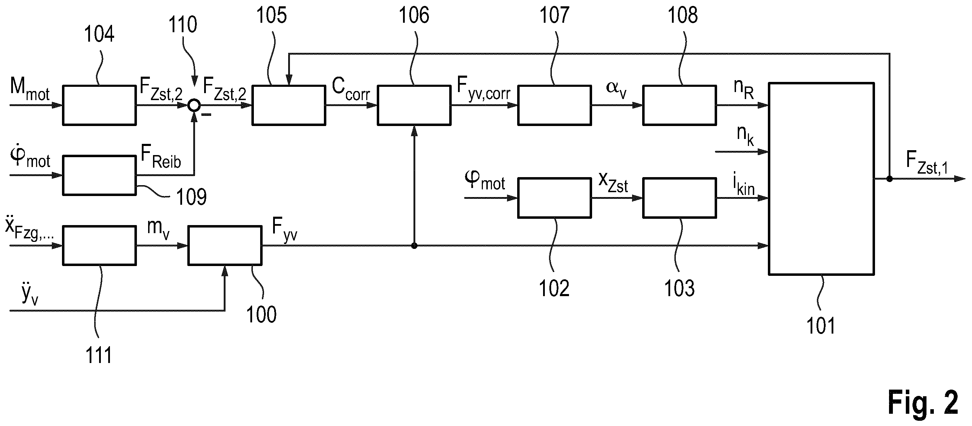

Die Steuereinrichtung 9 ist dazu eingerichtet, die Zahnstangenkraft $F_{Zst,1}$ zu bestimmen. In der Fig. 2 ist zur Verdeutlichung ein schematisches Ablaufdiagramm des Verfahrens gezeigt. Die Steuereinrichtung 9 ist dazu eingerichtet, hierzu eine erfasste und/oder geschätzte Querbeschleunigung $\ddot{y}_v$ an einer Lenkachse der Lenkung 1 und ein erfasstes Motormoment $M_{mot}$ der elektrischen Maschine 8 zu erhalten. Ausgehend von der erfassten oder geschätzten Querbeschleunigung $\ddot{y}_v$ bestimmt die Steuereinrichtung 9 eine Reifenseitenraft $F_{yv}$ (Verfahrensschritt 100).

Ferner bestimmt die Steuereinrichtung 9 ausgehend von einem nichtlinearen kinematischen Reifennachlaufwert $n_R$, einem konstruktiven Reifennachlaufwert $n_K$, einer Spurhebelübersetzung $i_{kin}$ und der bestimmten Reifenseitenkraft $F_{yv}$ eine erste Zahnstangenkraft $F_{Zst,1}$ (Verfahrensschritt 101). Die Spurhebelübersetzung $i_{kin}$ wird beispielsweise ausgehend von einem erfassten Motorwinkel $\varphi_{mot}$ bestimmt, indem dieser in eine Zahnstangenposition $x_{Zst}$ (Verfahrensschritt 102) und mittels einer Spurhebelkinematik in die Spurhebelübersetzung $i_{kin}$ (Verfahrensschritt 103) umgerechnet wird.

Ausgehend von dem erfassten Motormoment $M_{mot}$ bestimmt die Steuereinrichtung 9 ferner eine zweite Zahnstangenkraft $F_{Zst,2}$ (Verfahrensschritt 104). Die bestimmte erste Zahnstangenkraft $F_{Zst,1}$ und die bestimmte zweite Zahnstangenkraft $F_{Zst,2}$ werden miteinander verglichen (Verfahrensschritt 105), und ausgehend von einem Vergleichsergebnis wird die bestimmte Reifenseitenkraft $F_{yv}$ mittels eines Korrekturfaktors $c_{corr}$ korrigiert zu einer korrigierten Reifenseitenkraft $F_{yv,corr}$ (Verfahrensschritt 106).

Die Steuereinrichtung 9 ist ferner dazu eingerichtet, den nichtlinearen kinematischen Reifennachlaufwert $n_R$ ausgehend von der korrigierten Reifenseitenkraft $F_{yv,corr}$ zu bestimmen (Verfahrensschritte 107 und 108). Hierzu werden insbesondere ein inverses Reifenmodell (z.B. mittels einer empirisch und/oder durch Simulation bestimmten Kennlinie des Schräglaufwinkels $\alpha_v$ über der Reifenseitenraft $F_{yv}$) und ein Nachlaufmodell (z.B. mittels einer empirisch und/oder durch Simulation bestimmten Kennlinie des nichtlinearen kinematischen Reifennachlaufwerts $n_R$ über dem Schräglaufwinkel $\alpha_v$) verwendet, wie dies in der allgemeinen Beschreibung bereits beschrieben wurde.

Die Verfahrensschritte werden insbesondere so lange wiederholt, bis die erste Zahnstangenkraft $F_{Zst,1}$ konvergiert ist.

Die bestimmte erste Zahnstangenkraft $F_{Zst,1}$ wird von der Steuereinrichtung 9 bereitgestellt.

Es kann vorgesehen sein, dass eine Motorwinkelgeschwindigkeit $\dot{\varphi}_{mot}$ der elektrischen Maschine 8 erfasst wird, wobei ausgehend von der erfassten Motorwinkelgeschwindigkeit $\dot{\varphi}_{mot}$ eine Reibungskompensation an der ausgehend von dem Motormoment $M_{mot}$ geschätzten zweiten Zahnstangenkraft $F_{Zst,2}$ durchgeführt wird. Hierzu wird ausgehend von der erfassten Motorwinkelgeschwindigkeit $\dot{\varphi}_{mot}$ eine Reibung $F_{Reib}$ bestimmt (Verfahrensschritt 109) und die bestimmte Reibung $F_{Reib}$ von der zweiten Zahnstangenkraft $F_{Zst,2}$ abgezogen (Verfahrensschritt 110).

Es kann vorgesehen sein, dass die Querbeschleunigung $\ddot{y}_v$ mittels eines an oder in der Nähe der Lenkungsachse angeordneten Querbeschleunigungssensors 13 (Fig. 1) erfasst wird.

Es kann vorgesehen sein, dass der Querbeschleunigungssensor 13 in oder an dem Lenkmodul 3 der Lenkung 1 angeordnet ist. Insbesondere kann vorgesehen sein, dass der Querbeschleunigungssensor 13 auf einer Platine (PCB) der Steuereinrichtung 9 angeordnet ist.

Es kann alternativ oder zusätzlich vorgesehen sein, dass die Querbeschleunigung $\ddot{y}_v$ an der Lenkachse ausgehend von erfassten Messwerten einer Inertialsensorik 54 des Fahrzeugs 50 geschätzt wird. Eine Umrechnung erfolgt dann insbesondere gemäß dem in der allgemeinen Beschreibung beschriebenen Verfahren.

Es kann vorgesehen sein, dass eine Radaufstandskraft erfasst und/oder geschätzt wird, wobei ausgehend von der erfassten und/oder geschätzten Radaufstandskraft eine Radaufstandsmasse $m_v$ bestimmt wird (Verfahrensschritt 111), wobei die bestimmte Radaufstandsmasse $m_v$ beim Bestimmen der Reifenseitenkraft $F_{yv}$ berücksichtigt wird (Verfahrensschritt 100).

Es kann ferner vorgesehen sein, dass die Radaufstandskraft ausgehend von erfassten und/oder geschätzten Federwegen und/oder Beschleunigungen $\ddot{x}_{Fzg}$ angepasst wird.

Es kann vorgesehen sein, dass ausgehend von der bereitgestellten ersten Zahnstangenkraft $F_{Zst,1}$ ein Rückkopplungsmoment 20 für eine Lenkhandhabe 51 der Lenkung 1 bestimmt und bereitgestellt wird. Dies erfolgt in an sich bekannterweise.

Die Fig. 3 zeigt eine schematische Darstellung zur Verdeutlichung der in dieser Offenbarung genannten Größen und der in der allgemeinen Beschreibung beschriebenen Zusammenhänge. Hierbei ist $\delta_v$ der Lenkwinkel des Rades 52 und x und y sind kartesische Koordinaten in einem Koordinatensystem des Fahrzeugs.

Die Fig. 4 zeigt eine schematische Darstellung zur Verdeutlichung der in dieser Offenbarung genannten Größen und der in der allgemeinen Beschreibung beschriebenen Zusammenhänge. Insbesondere sind eine Radaufstandsfläche A und der nichtlineare kinematische Reifennachlauf $n_R$ gezeigt.

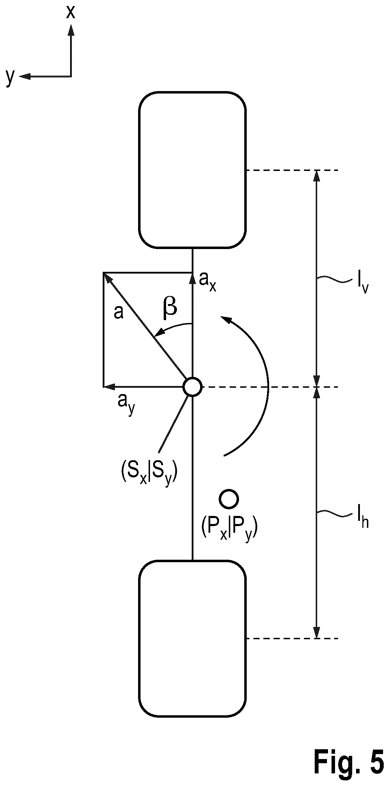

Die Fig. 5 zeigt eine schematische Darstellung zur Verdeutlichung der in dieser Offenbarung genannten Größen und der Ausführungsform, bei der die Querbeschleunigung ausgehend von erfassten Messwerten einer Inertialsensorik geschätzt wird. Hierbei bezeichnet $l_h$ den Abstand vom Schwerpunkt des Fahrzeugs zur Hinterachse und $l_v$, den Abstand des Schwerpunktes zur Vorderachse. Die Schwerpunktlage ist durch $S = (S_x|S_y|S_z)$ definiert und der Abstand des benötigen virtuellen Punkts der Beschleunigung zum Schwerpunkt ist durch $P = (P_x|P_y|P_z)$ definiert (es wird also bei der Darstellung in Fig. 5 angenommen, dass $S$ im Ursprung liegt). Der Punkt $P$ ist hierbei beispielhaft im hinteren Fahrzeugbereich dargestellt. Bei dem in dieser Offenbarung beschriebenen Verfahren muss der Punkt $P$ hingegen im Bereich der Lenkung angeordnet sein, um die Querbeschleunigung dort zu berechnen.

Die Fig. 6 zeigt beispielhaft eine Kennlinie gemäß einer Pacejka-Modellierung, in der eine Reifenseitenkraft $F_{yv}$ über einem Schräglaufwinkel $\alpha_v$ dargestellt ist.

Die Fig. 7 zeigt eine Kennlinie, die invers zu der in der Fig. 6 dargestellten Kennlinie ist (invertierte Pacejka-Modellierung). Zum Bestimmen des Schräglaufwinkels $\alpha_v$ aus der Reifenseitenkraft $F_{yv}$ wird, wie bereits in der allgemeinen Beschreibung beschrieben, nur der gestrichelte Teil bis zum Wendepunkt verwendet, sodass zu jeder Reifenseitenkraft ein Schräglaufwinkel bestimmt werden kann.

Die Fig. 8 zeigt eine beispielhafte Kennlinie des nichtlinearen kinematischen Reifennachlaufwertes $n_R$ über dem Schräglaufwinkel $\alpha_v$ gemäß einer Pacejka-Modellierung. Eine solche Kennlinie wird im Rahmen des Verfahrensschritts 108 (Fig. 2) verwendet, um ausgehend von dem Schräglaufwinkel $\alpha_v$ den nichtlinearen kinematischen Reifennachlauf-

wert $n_R$ zu bestimmen, wie dies in der allgemeinen Beschreibung bereits beschrieben wurde.

Bezugszeichenliste

| 1 | Lenkung |
|---|---|
| 2 | Lenkradmodul |
| 3 | Lenkmodul |
| 4 | Kommunikationsverbindung |
| 5 | Sensor |
| 6 | Aktuator |
| 7 | Sensor |
| 8 | elektrische Maschine |
| 9 | Steuereinrichtung |
| 11 | Lenkgetriebe |
| 13 | Querbeschleunigungssensor |
| 20 | Rückkopplungsmoment |
| 50 | Fahrzeug |
| 51 | Lenkhandhabe |
| 52 | lenkbares Rad |
| 53 | Zahnstange |
| 54 | Inertialsensorik |
| 101-111 | Verfahrensschritte |
| A | Radaufstandsfläche |
| $c_{corr}$ | Korrekturfaktor |
| $F_{Reib}$ | Reibung |
| $F_{yv}$ | Reifenseitenkraft |
| $F_{yv,corr}$ | korrigierte Reifenseitenkraft |
| $F_{Zst,1}$ | erste Zahnstangenkraft |
| $F_{Zst,2}$ | zweite Zahnstangenkraft |
| $i_{kin}$ | Spurhebelübersetzung |
| $M_{mot}$ | Motormoment |
| $m_v$ | Radaufstandsmasse |
| $n_K$ | konstruktiver Reifennachlaufwert |
| $n_R$ | nichtlinearer kinematischer Reifennachlaufwert |
| $x$ | kartesische Koordinate im Koordinatensystem des Fahrzeugs |
| $y$ | kartesische Koordinate im Koordinatensystem des Fahrzeugs |
| $\ddot{x}_{Fzg}$ | Beschleunigung |
| $\ddot{y}_v$ | Querbeschleunigung (Vorderachse) |
| $\alpha_v$ | Schräglaufwinkel |
| $\varphi_{mot}$ | Motorwinkel |
| $\dot{\varphi}_{mot}$ | Motorwinkelgeschwindigkeit |

## Patentansprüche

1. Verfahren zum Bestimmen einer Zahnstangenkraft ($F_{Zst,1}$) an einer Lenkung (1),

wobei eine Querbeschleunigung ($\ddot{y}_v$) an einer Lenkachse der Lenkung (1) erfasst und/oder geschätzt wird,
wobei ausgehend von der erfassten und/oder geschätzten Querbeschleunigung ($\ddot{y}_v$) eine Reifenseitenkraft ($F_{yv}$) bestimmt wird,
wobei ausgehend von einem nichtlinearen kinematischen Reifennachlaufwert ($n_R$), einem konstruktiven Reifennachlaufwert ($n_K$), einer Spurhebelübersetzung ($i_{kin}$) und der bestimmten Reifenseitenkraft ($F_{yv}$) eine erste Zahnstangenkraft ($F_{Zst,1}$) bestimmt wird,
wobei ausgehend von einem erfassten Motormoment ($M_{mot}$) einer zum Aufbringen eines Lenkmoments verwendeten elektrischen Maschine (8) eine zweite Zahnstangenkraft ($F_{Zst,2}$) bestimmt wird,
wobei die bestimmte erste Zahnstangenkraft ($F_{Zst,1}$) und die bestimmte zweite Zahnstangenkraft ($F_{Zst,2}$) miteinander verglichen werden, und

wobei ausgehend von einem Vergleichsergebnis die bestimmte Reifenseitenkraft ($F_{yv}$) korrigiert wird,
wobei der nichtlineare kinematische Reifennachlaufwert ($n_R$) ausgehend von der korrigierten Reifenseitenkraft ($F_{yv,corr}$) bestimmt wird, und
wobei die bestimmte erste Zahnstangenkraft ($F_{Zst,1}$) bereitgestellt wird.

2. Verfahren nach Anspruch 1, **dadurch gekennzeichnet, dass** eine Motorwinkelgeschwindigkeit ($\dot{\varphi}_{mot}$) der elektrischen Maschine (8) erfasst wird, wobei ausgehend von der erfassten Motorwinkelgeschwindigkeit ($\ddot{\varphi}_{mot}$) eine Reibungskompensation an der ausgehend von dem Motormoment ($M_{mot}$) geschätzten zweiten Zahnstangenkraft ($F_{Zst,2}$) durchgeführt wird.

3. Verfahren nach Anspruch 1 oder 2, **dadurch gekennzeichnet, dass** die Querbeschleunigung ($\ddot{y}_v$) mittels eines an oder in der Nähe der Lenkungsachse angeordneten Querbeschleunigungssensors (13) erfasst wird.

4. Verfahren nach Anspruch 3, **dadurch gekennzeichnet, dass** der Querbeschleunigungssensor (13) in oder an einem Lenkmodul (3) der Lenkung (1) angeordnet ist.

5. Verfahren nach einem der vorangegangenen Ansprüche, **dadurch gekennzeichnet, dass** die Querbeschleunigung ($\ddot{y}_v$) ausgehend von erfassten Messwerten einer Inertialsensorik (54) geschätzt wird.

6. Verfahren nach einem der vorangegangenen Ansprüche, **dadurch gekennzeichnet, dass** eine Radaufstandskraft erfasst und/oder geschätzt wird, wobei ausgehend von der erfassten und/oder geschätzten Radaufstandskraft eine Radaufstandsmasse ($m_v$) bestimmt wird, wobei die bestimmte Radaufstandsmasse ($m_v$) beim Bestimmen der Reifenseitenkraft ($F_{yv}$) berücksichtigt wird.

7. Verfahren nach Anspruch 6, **dadurch gekennzeichnet, dass** die Radaufstandskraft ausgehend von erfassten und/oder geschätzten Federwegen und/oder Beschleunigungen ($\ddot{x}_{Fzg}$) angepasst wird.

8. Verfahren nach einem der vorangegangenen Ansprüche, **dadurch gekennzeichnet, dass** ausgehend von der bereitgestellten ersten Zahnstangenkraft ($F_{Zst,1}$) ein Rückkopplungsmoment (20) für eine Lenkhandhabe (51) der Lenkung (1) bestimmt und bereitgestellt wird.

9. Lenkung (1), umfassend:

eine Steuereinrichtung (9), wobei die Steuereinrichtung (9) dazu eingerichtet ist, eine erfasste und/oder geschätzte Querbeschleunigung ($\ddot{y}_v$) an einer Lenkachse der Lenkung (1) und ein erfasstes Motomoment ($M_{mot}$) einer zum Aufbringen eines Lenkmoments verwendeten elektrischen Maschine (8) zu erhalten,
ausgehend von der erfassten und/oder geschätzten Querbeschleunigung ($\ddot{y}_v$) eine Reifenseitenraft ($F_{yv}$) zu bestimmen,
ausgehend von einem nichtlinearen kinematischen Reifennachlaufwert ($n_R$), einem konstruktiven Reifennachlaufwert ($n_K$), einer Spurhebelübersetzung ($i_{kin}$) und der bestimmten Reifenseitenkraft ($F_{yv}$) eine erste Zahnstangenkraft ($F_{Zst,1}$) zu bestimmen,
ausgehend von dem erfassten Motormoment ($M_{mot}$) eine zweite Zahnstangenkraft ($F_{Zst,2}$) zu bestimmen,
die bestimmte erste Zahnstangenkraft ($F_{Zst,1}$) und die bestimmte zweite Zahnstangenkraft ($F_{Zst,2}$) miteinander zu vergleichen, und
ausgehend von einem Vergleichsergebnis die bestimmte Reifenseitenkraft ($F_{yv}$) zu korrigieren,
den nichtlinearen kinematischen Reifennachlaufwert ($n_R$) ausgehend von der korrigierten Reifenseitenkraft ($F_{yv,corr}$) zu bestimmen, und
die bestimmte erste Zahnstangenkraft ($F_{Zst,1}$) bereitzustellen.

10. Lenkung nach Anspruch 9, umfassend einen Querbeschleunigungssensor (13).

**Fig. 1**

Fig. 2

EP 4 674 728 A1

$\delta v$

$x$

$y$

$F_{Zst}$

$\dfrac{1}{i_{kin}}$

$n_R + n_K$

$F_{yv}$

52

**Fig. 3**

$F_{yv}$

$n_R$

A

**Fig. 4**

Fig. 5

Fig. 6

Fig. 7

Fig. 8

EUROPÄISCHES PATENTAMT
European Patent Office
Office européen des brevets

# EUROPÄISCHER RECHERCHENBERICHT

Nummer der Anmeldung

EP 25 18 5988

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 566 743 B1 (ZF LENKSYSTEME GMBH [DE]) 23. Juli 2014 (2014-07-23) * Absätze [0032] - [0048]; Abbildungen 1-3 * ----- | 1-10 | INV. B62D6/00 |

RECHERCHIERTE SACHGEBIETE (IPC)

B62D

Der vorliegende Recherchenbericht wurde für alle Patentansprüche erstellt

| Recherchenort | Abschlußdatum der Recherche | Prüfer |
|---|---|---|
| Den Haag | 4. November 2025 | Kulozik, Ehrenfried |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 18 5988

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2025

| Im Recherchenbericht angeführtes Patentdokument | Datum der Veröffentlichung | Mitglied(er) der Patentfamilie | Datum der Veröffentlichung |
|---|---|---|---|
| EP 2566743 B1 | 23-07-2014 | DE 102010028547 A1 | 01-12-2011 |
|  |  | EP 2566743 A1 | 13-03-2013 |
|  |  | WO 2011137940 A1 | 10-11-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2566743 B1
- DE 102014114751 A1